# EUROPEAN PATENT SPECIFICATION

(11) **EP 2 967 113 B1**
(45) Date of publication and mention of the grant of the patent: **20.02.2019**
(21) Application number: 14775880.9
(22) Date of filing: 12.03.2014
(51) Int. Cl.: A23G 3/50, A23G 3/52, A23G 3/54, A23G 4/06, A23G 4/18, A23G 4/20

(54) **DRY FOAM CONFECTIONARY PRODUCT**
TROCKENSCHAUM-SÜSSWARE
PRODUIT DE CONFISERIE À MOUSSE SÈCHE

(30) Priority: 14.03.2013 US 201361781923 P
(43) Date of publication of application: 20.01.2016
(73) Proprietor: Wm. Wrigley Jr. Company, Chicago, IL 60642 (US)
(72) Inventor: BROWN, Scott G., Oswego, Illinois 60543 (US); GRAFF, Gwendolyn, DeKalb, Illinois 60115 (US); SONG, Joo, Chicago, Illinois 60605 (US); TACKETT, April J., Chicago, Illinois 60661 (US)
(74) Representative: Dehns
(86) International application number: PCT/US2014/024633
(87) International publication number: WO 2014/159665

(56) References cited:
- WO-A1-98/34497
- WO-A2-2006/127560
- CA-A- 1 229 517
- FR-A- 1 228 510
- US-A- 4 352 824
- US-A- 4 741 905
- US-A1- 2006 263 475
- US-A1- 2011 129 426
- WEBB, PA ET AL.: 'Modem Methods of Particle Characterization' 1998, pages 1 - 17, XP055290731 Retrieved from the Internet: <URL:http://www.micromeritics.com/Repositor y/Files/Modern_Methods_of_Particle_Characte rization.p df> [retrieved on 2014-05-23]

## Description

### BACKGROUND OF THE INVENTION

The present invention relates to a multiple portion confectionary product that has multiple textures and provides multiple sweetness release profiles, and to the process for making the confectionary product. More specifically the invention relates to a multiple portion confectionary product, wherein the confectionary product contains a dry foam portion and a chewing gum portion. The dry foam portion contains at least 80 wt. % bulking sweetener agent. The chewing gum portion contains chewing gum base. The dry foam portion has an envelope density of less than 0.8 g/ml. Preferably, the chewing gum portion contains less than 30 wt. % bulking sweetener agent.

Several forms of confectionary products can deliver an initial fast release of sweetness and flavor upon first bite, such as after-dinner mints, or cotton candy. These products quickly dissolve and are then swallowed. These confectionary products are in a crystalline form with high surface area, either because of large individual crystals formed (e.g., after-dinner mints) or because of a large surface area formed (e.g., cotton candy). Other forms of confectionary products, such as chewy or toffee confections, can deliver sweetness and flavor for a longer duration than after-dinner mints or cotton candy. However, chewy or toffee confections do not provide a fast initial release of flavor and sweetness.

Chewing gum products can be formulated to deliver sweetness and flavor over an extended period of time. The extended sweetness and flavor delivery is typically created by mixing gum base with bulking sweetener agent and flavors during the production of chewing gum products. The bulking sweetener agent and flavors are released in the mouth as the saliva mixes with the gum during chewing. Often, gum base, which is water insoluble, traps pockets of bulking sweetener agent and/or flavor, further slowing the release of sweetness and flavor. Encapsulates or other release modifiers can be used to further extend the release.

Chewing gum can be coated with a water soluble coating that can provide an initial fast release of sweetness and flavor. Many consumers enjoy the combination of a soft chewing gum center texture with a hard coating. When a coated chewing gum piece is consumed, the coating breaks into small pieces that can quickly dissolve providing an initial fast release of sweetness and flavor. The chewing gum center provides a more extended release of sweetness and flavor during chewing. A hard and brittle coating also provides a "crunch" sensation, which is both an audible and tactile sensation that many consumers enjoy. Typically, coatings are applied to chewing gum using a pan coating process.

In a typical pan coating process, a solution containing bulk sweetener, and optionally other ingredients such as flavors, is applied to the surface of chewing gum pieces. The solution can be applied using ladles, sprayers or other tools. The gum pieces are then allowed to dry to allow the solution to crystallize. The solution application and drying steps are performed repeatedly until the desired amount of coating is formed.

In pan coating, the chewing gum pieces are tumbled in a pan or drum. Tumbling helps distribute the coating material and allows each application to dry on to individual chewing gum pieces. However, the tumbling process limits the shape of the chewing gum pieces to rounded shapes or shapes with rounded corners, for example, balls, lentils or pillows. The pan coating process can also be time consuming and may be a rate-limiting step in the manufacture of coated chewing gum.

WO2006/127560 discloses a dual composition gum product, wherein a non-gum portion with a different texture is present and may be a foam or a glassy matrix.

It would be useful to have a multiple portion confectionary product that provides multiple textures and delivers both an initial fast release of sweetness and flavor and an extended release of sweetness and flavor. It would be useful to have a process that would be capable of creating alternative forms of these multiple portion confectionary products.

### SUMMARY OF INVENTION

The present invention relates to a multiple portion confectionary product that has multiple textures and provides multiple sweetness release profiles, and to the process for making the confectionary product. More specifically the invention relates to a multiple portion confectionary product, wherein the confectionary product contains a dry foam portion and a chewing gum portion. The dry foam portion contains at least 80 wt. % bulking sweetener agent. The chewing gum portion contains chewing gum base. The dry foam portion has an envelope density of less than 0.8 g/ml.

### DETAILED DESCRIPTION OF INVENTION

The product of this invention comprises a dry foam portion of not less than 80 wt. % bulking sweetener agent and a chewing gum portion. The dry foam portion has an envelope density of less than 0.8 g/ml. The process of this invention is a method of manufacturing the multiple portion confectionary product. The multiple portion confection of this invention may have one, or more than one, dry foam portion, and may have one, or more than one, chewing gum portion. The portions may be arranged within the final confectionary product in any arrangement. This invention is not limited by the number of dry foam portions, number of chewing gum portions, or their arrangement in relation to each other.

The product of this invention contains a dry foam portion. As used herein, "dry foam" means an aerated, firm, and spatially open, structure that contains less than 8 wt. % water. When used to describe the dry foam, "firm" means that the dry foam has a rigid texture at room temperature (i.e., 22 - 27 C), that is, it maintains its shape at room temperature. When used to describe the dry foam, "spatially open" means that the dry foam has multiple interior air cells.

The product of this invention contains a dry foam portion that contains less than 8 wt. % water. Water in the confection mass making up the dry foam portion may interfere with the crystallization of the bulking sweetener agent. Thus, the lower the moisture content is, the more crystalline the dry foam portion may be. The more crystalline the dry foam portion is, the more firm, brittle, crunchy, and soluble the dry foam may be. Thus, preferably, the dry foam portion contains less than 5 wt. % water. Most preferably, the dry foam portion contains less than 3 wt. % water.

The dry foam portion of this invention comprises at least 80 wt. % bulking sweetener agent. Bulking sweetener agent refers to an ingredient, or combination of ingredients, that provides mass and structure to a product and also imparts sweetness. Bulking sweetener agents include, but are not limited to, saccharides (for example, simple sugars, complex sugars, dextrins, maltodextrins, starches, modified starches, polydextrose, inulin, fructooligosaccharides), polyols, and combinations thereof. Bulking sweetener agents that melt, and then create firm amorphous or glass structures upon cooling to room temperature may be used in the dry foam portion, as long as air cells can be created during processing that will then become firm upon cooling to room temperature. Preferred are bulking sweetener agents that melt, and then create at least partially crystallized structures upon cooling to room temperature. Preferred bulking sweetener agents are also those that quickly dissolve so that a quick release of sweetness and flavor may develop during chewing. A product of this invention may contain more than one first portion, each having the same or different bulking sweetener agent or a combination of bulking sweetener agents. The dry foam portion of this invention comprises at least 80 wt. % bulking sweetener agent.

The dry foam portion also has an envelope density of less than 0.8 g/ml. The envelope density is a measure of the aeration of the dry foam portion. The envelope density of the dry foam portions of this invention were measured using a "granular sugar displacement method", containing the steps of: 1) tare a 25 ml glass graduated cylinder; 2) weigh out 5 formed portions in the tarred graduated cylinder on a weight scale; 3) fill the graduated cylinder carefully with dry granular sugar until all 5 portions are covered with sugar; 4) tap the cylinder with 5 portions and granular sugar 10 times on padded table top; 5) adjust the sugar fill volume to cylinder's 25 ml mark; 6) remove the contents from the cylinder and then carefully separate sugar from portions; 7) return the granular sugar contents back to the cylinder; 8) record the volume (volume less than 25 ml, measured in ml) of the granular sugar contents from cylinder markings; and 9) calculate the portion envelope density: Mass of 5 formed portions (grams) ÷ Volume in cylinder difference between with and without 5 formed portions = Envelope density in g/ml.

Envelope density is the mass of the dry foam portion divided by the exterior dimensions of the dry foam portion. The area of the interior air cells is not part of the calculation. Whereas, the specific density of a dry foam portion is the mass of the confection portion divided by the area of the exterior volume minus the area of the interior volume of any air cells. If there are no interior air cells, then the envelope density would be the same as the specific density.

The more aerated the dry foam portion is, the lower the envelope density will be. The more aerated the dry foam, the faster the dry foam will dissolve in the mouth due to the greater surface area per gram of ingredients. Thus, a lower envelope density is preferred. The dry foam portion has an envelope density of less than 0.8 g/ml. Preferably, the dry foam portion has an envelope density of less than 0.5 g/ml. Most preferably, the dry foam portion has an envelope density of less than 0.3 g/ml.

The dry foam portion of the multiple portion confectionary product provides an initial fast release of sweetness and flavor when consumed. Optionally, the dry foam portion also imparts a "crunch" sensation when first bitten into, that is, an audible and tactile sensation. The release rate of sweetness by the dry foam portion will depend upon several factors; including the degree of aeration (as measured by envelope density), the amount of crystallinity, and the solubility of the bulking sweetener agent. In general, the more aerated the dry foam portion, the thinner the air cell walls and the more surface area created per gram of bulking sweetener agent. The bulking sweetener agent may be chosen such that under aeration conditions the bulking sweetener agent will form a firm amorphous or glass structure that is very soluble in saliva in the mouth. With the preferred bulking sweetener agents, this structure will also have a high level of crystallinity, which increases the fragility of the air cell walls. The choice of bulking sweetener agent affects the speed of the dry foam dissolving as each bulking agent has its own solubility. If flavor and/or other ingredients, such as, but not limited to, high intensity sweeteners (HIS), sensates, acids, salts, actives, and color, are also in the dry foam portion, then these ingredients will also have a fast release.

In an embodiment of the invention, a dry foam portion contains at least 80 wt. % bulking sweetener agent, preferably at least 90 wt. % bulking sweetener agent. The greater the percent of bulking sweetener agent in the dry foam portion, the greater the potential for a "crunch" texture and a fast release of sweetness during chewing.

In an embodiment of the invention, a chewing gum portion contains not more than 30 wt. % bulking sweetener agent, preferably not more than 10 wt. % bulking sweetener agent, most preferably not more than 5 wt. % bulking sweetener agent. Also, more bulking sweetener agent in the dry foam portion may lead to more bulking sweetener agent mixing with the chewing gum portion. The lower the bulking sweetener agent content in the chewing gum portion, the less gum portion mass needs to be applied on to the dry foam potion to achieve an elastic and cohesive finished product during chewing. In an embodiment of the invention, the bulking sweetener agent of a dry foam portion contains at least 30 wt. %, but not more than 100 wt. % isomalt. In an embodiment of the invention, the bulking sweetener agent of a dry foam portion contains at least 30 wt. %, but not more than 100 wt. % polydextrose. In an embodiment of the invention, the bulking sweetener agent of a dry foam portion contains 10 to 90 wt. % isomalt and 90 to 10 wt. % polydextrose.

The product of this invention contains a chewing gum portion. Chewing gum traditionally comprises two fractions: a water soluble fraction and a water insoluble fraction. The water soluble fraction includes bulking sweetener agents and optional additional ingredients such as, but not limited to, flavor, high intensity sweeteners (HIS), sensates, acids, salts, colors, and actives. The water insoluble fraction includes chewing gum base and optional additional ingredients such as, but not limited, encapsulated flavors or sweeteners, fats, oils, waxes, and water insoluble fillers (e.g. calcium carbonate). The term "chewing gum" includes bubble gum and similar products. As used herein, "chewing gum base" contains ingredients such as, but not limited to, elastomers, rubbers, fats, oils, softeners, fillers, and combinations thereof. The chewing gum base must contain at least one ingredient that will create an elastic texture during mastication.

The chewing gum portion may contain any amount of bulking sweetener agent. The chewing gum portion must contain at least some chewing gum base. The chewing gum portion contains not less than 50 wt. %, preferably not less than 70 wt. %, most preferably not less than 80 wt. % gum base. The chewing gum portion contains not more than 30 wt. % bulking sweetener agent. The chewing gum portion may contain no bulking sweetener agent.

In an embodiment of the invention, a chewing gum portion contains not less than 70 wt. % chewing gum base, and not more than 20 wt. % bulking sweetener agent. Preferably, a chewing gum portion contains not more than 10 wt. % bulking sweetener agent. More preferably, a chewing gum portion contains not more than 5 wt. % bulking sweetener agent. Most preferably, a chewing gum portion contains no bulking sweetener agent.

In an embodiment of the invention, a chewing gum portion contains polyvinyl acetate (PVAc) gum base.

In an embodiment of the invention, at least one chewing gum portion covers at least part of at least one dry foam portion. This arrangement enhances the mixing of the portions as the product is chewed, Because of this mixing during chewing, less bulking sweetener agent is needed in the chewing gum portion to make the chewing gum portion perceived as sweet by the consumer. An additional benefit of a chewing gum portion covering a dry foam portion is that the chewing gum portion can reduce moisture adsorption by the dry foam portion.

The process of the invention includes the steps of: 1) creating a dry foam portion; 2) creating a chewing gum portion; and 3) combining the dry foam portion and the chewing gum portion. A further process step includes forming the combined portions into a shape. A further process step includes finishing the multiple portion confectionary product by processes including spraying with liquid ingredients, dusting with dry ingredients, or a combination thereof.

In general, the process of creating a dry foam portion includes the steps of: 1) creating a confectionary mass comprising at least 80 wt. % bulking sweetener agent; and 2) aerating the confection mass to an envelope density of less than 0.8 g/ml at room temperature (i.e., 22 - 27 C). Optionally, the dry foam may be cut and/or shaped into pieces. Also, optionally the dry foam pieces might be sprayed with liquid ingredients or dusted with dry ingredients.

The aerated dry foam portion may be produced by several processes including, but not limited to, aeration by combining a gas with the confection mass containing bulking sweetener agent, aeration by combining gas producing ingredients with the confection mass containing bulking sweetener agent, and aeration by evaporating the water within the confection mass containing bulking sweetener agent.

In an embodiment the invention is a process of creating a dry foam portion comprising the steps of: a) forming an ingredient mass comprising not less than 80 wt. % bulking sweetener agent; b) mixing and melting the ingredient mass to form a melted ingredient mass; c) mixing the melted ingredient mass with super critical carbon dioxide; and d) expanding the resultant mixed melted ingredient mass to an envelope density of less than 0.8 g/ml.

In another embodiment, the method for creating a dry foam portion comprises the steps of 1) introducing an ingredient mass containing at least 80 wt.% bulking sweetener agent, along with optional additional ingredients, such as, but not limited to, HIS, colors, acids, actives, flavors, and sensates; 2) mixing and melting the ingredient mass; 3) introducing supercritical carbon dioxide; 4) mixing the melted ingredient mass with the carbon dioxide; 5) forcing the mixture through an opening and/or die under such temperature and pressure conditions as to create expansion of the ingredient mass; 6) dividing the expanded ingredient mass into portions; 7) optionally cooling the portions to sub-room temperature to reduce or prevent cell collapsing and/or product portions sticking to each other, and 8) tempering the portions to room temperature. The resulting portions contain less than 8 wt. % water. The resulting portions have an envelope density of less than 0.8 g/ml.

Supercritical carbon dioxide is carbon dioxide in a fluid state when it is held at, or above, its critical temperature (31 °C) and pressure (73 atm). In this fluid state, carbon dioxide is between a gas and a liquid. Supercritical carbon dioxide has a solvent character that can be used for extraction or as an aeration agent.

Also described herein is a process of creating a dry foam portion comprises the steps of: 1) introducing an ingredient mass containing at least 80 wt.% bulking sweetener agent, along with optional additional ingredients, such as but not limited to HIS, colors, acids, actives, flavors, and sensates into at least one section of an apparatus; 2) mixing and melting the ingredient mass in the apparatus; 3) introducing nitrogen gas, air, steam, or combinations thereof into the apparatus; 4) mixing the melted ingredient mass with the nitrogen gas, air, steam, or combinations thereof, in the apparatus; 5) forcing the mixture from the apparatus through an opening and/or die located in a section of the apparatus under such temperature and pressure conditions as to create expansion of the ingredient mass upon exiting the apparatus opening and/or die; 6) dividing the expanded ingredient mass into portions after or as it exits the apparatus opening and/or die; 7) optionally cooling the portions to sub-room temperature to reduce or prevent cell collapsing and/or product portions sticking to each other, and 8) tempering the portions to room temperature. The resulting portions contain less than 8 wt. % water. The resulting portions have an envelope density of less than 0.8 g/ml.

Further described herein is a process of creating a dry foam portion comprises the steps of: 1) introducing an ingredient mass containing at least 80 wt.% bulking sweetener agent, along with optional additional ingredients, such as, but not limited to, HIS, colors, acids, actives, flavors, and sensates into at least one section of an apparatus; 2) introducing gas generating ingredients (e.g., baking soda and acid) into the apparatus; 3) mixing and melting the ingredient mass in the apparatus; 4) providing time and agitation sufficient to create pressure within the apparatus; 5) forcing the mixture from the apparatus through an opening and/or die located in a section of the apparatus under such temperature and pressure conditions as to create expansion of the ingredient mass upon exiting the apparatus opening and/or die; 6) dividing the expanded ingredient mass into portions after or as it exits the opening and/or die: 7) optionally cooling the portions to sub-room temperature to reduce or prevent cell collapsing and/or product sticking to each other, and 8) tempering the portions to room temperature. The resulting portions contain less than 8 wt. % water. The resulting portions have an envelope density of less than 0.8 g/ml.

Further described herein is a process of creating a dry foam portion comprises the steps of: 1) introducing an ingredient mass containing at least 80 wt.% bulking sweetener agent, along with optional additional ingredients, such as, but not limited to, HIS, colors, acids, actives, flavors, and sensates, into at least one section of an apparatus; 2) mixing and melting the ingredient mass in the apparatus; 3) forcing the mixture from the apparatus through an opening and/or die located in a section of the apparatus; 4) dividing the ingredient mass into portions after or as it exits the opening and/or die; 5) heating the exited portions at between 80 - 120 °C in a chamber under vacuum at between 51-102 kPa (15 - 30 inches Hg) until the portions have expanded to an envelope density of less than 0.8 g/ml; and 6) tempering expanded portions to room temperature. The resulting portions contain less than 8 wt. % water.

In any of the above embodiments, the apparatus used is such that it can mix, melt, and pressurize the ingredients introduced into the apparatus. The apparatus could be physically a single piece of equipment or multiple pieces of equipment used in sequence. The apparatus could be, or could include, a pressurized mixing bowl with appropriate entrance and exit sections. Preferably the apparatus is a single piece of equipment. Preferably, the apparatus has subsections that can be individually controlled as to temperature and mixing conditions, including pressure. Preferably, the apparatus also has entrance sections appropriate for adding different forms of ingredients, such as gas, powder, liquid, or combinations thereof. Preferably, the apparatus is, or includes, an extruder. An extruder is defined as an enclosed container with moving parts that mix ingredients under controlled temperature conditions. An extruder has an entrance section for adding ingredients to the extruder and has an exit section with an opening and/or die for materials leaving the extruder. Preferably the extruder comprises a co-rotating intermeshing twin screw extruder. Preferably in the alternative, the extruder comprises a rotor and stator configuration. Preferably in the alternative, the extruder contains a "kneader" pin configuration. Preferably the extruder can create and/or maintain internal pressure.

In embodiment of the invention, a dry foam portion may be formed into different sizes, shapes, and densities using, but not limited to, rollers, knives, molds, rotary former, stamps, drop roller, or combinations thereof. In an embodiment of the invention a dry foam portion may be sprayed with fluid ingredients, dusted with solid ingredients, or combinations thereof.

The process of creating the chewing gum portion of this invention may be performed by any method known by one of ordinary skill in the art, including mixing, grinding, compacting, granularising, melting, pulling, extruding or combinations thereof. During processing the gum base may be combined with bulking sweetener agent and additional ingredients, and then the mass may be mixed, ground, compacted, granularised, melted, pulled, extruded or combination thereof. The chewing gum mass may then be formed into chewing gum portions. The chewing gum mass may be kept in a softened or fluid condition until combined with a dry foam portion.

In an embodiment of the invention, a multiple portion confectionary product of this invention may be produced by combining at least one chewing gum portion with at least one dry foam portion. The gum portion is combined with the dry foam portion by a method including, but not limited to, tumbling, moving, and/or dragging, the dry foam portion through a pool of fluid chewing gum. "Combining" includes coating, surrounding, encasing, or layering.

In an embodiment of this invention, a multiple portion confectionary product may be produced by combining at least one chewing gum portion with at least one dry foam portion by methods including, but not limited to, spraying, pouring, dribbling, dripping or combinations thereof, the chewing gum portion on to the dry foam portion.

In an embodiment of the invention, a multiple portion confectionary product of this invention may be produced by combining a chewing gum portion with a dry foam portion by methods including co-extrusion technique. In the co-extrusion technique, a dry foam portion and a chewing gum portion are created at the same or similar time. The portions are then extruded through laminar or concentric slots in the co-extruder die, such that the chewing gum portion would be placed on, or around, at least a part of a dry foam portion. The resulting multiple portion confection may have the dry foam and chewing gum portions orientated laminar or concentric to each other.

In an embodiment of the multiple portion confectionary product invention, a chewing gum portion may cover all, or part of, the outer surface area of a dry foam portion. In an embodiment of the invention, a multiple portion confectionary product may contain one or more dry foam portions and one or more chewing gum portions.

In an embodiment of the invention, the multiple portion confectionary product may be formed into different sizes, shapes, and densities using one or more forming devices including, but not limited to, rollers, knives, molds, rotary former, stamps, drop roller, or combination thereof. In an embodiment of the invention, the multiple portion confectionary product is not limited in shape, size, weight, or volume. In an embodiment of the invention, a multiple portion confectionary product may be sprayed with fluid ingredients, dusted with solid ingredients, or combinations thereof.

In an embodiment of the invention, the multiple portion confectionary product may be deposited or placed into or onto packaging material to be sealed into individual or multiple piece packages.

### EXAMPLES

A multiple portion confectionary product example, in accordance with the present invention was produced having a dry foam portion containing at least 80 wt. % bulking sweetener agent, and a chewing gum portion containing not more than 30 wt. % bulking sweetener agent. The multiple portion confectionary product example was produced by creating a dry foam portion (example 1), then creating a chewing gum portion (example 2), and finally combining the dry foam portion with the chewing gum portion into a combined multiple portion confectionary product (example 3).

Table 1 includes the formula for the dry foam portion for example 1. All components are in wt. % dry solids.

**Table 1: Dry Foam Portion Formula Example 1**

| Example # | Isomalt | | Polydextrose | | HIS* | | Spray dried/ capsule flavor |
|---|---|---|---|---|---|---|---|
| 1 | 33.89% | | 62.94% | | .0.26% | | 2.91% |

| | | | | | | | |
|---|---|---|---|---|---|---|---|
| * HIS= high intensity sweeteners | | | | | | | |

The dry foam portion of example 1 was processed in accordance with the supercritical carbon dioxide process as previously described, under the conditions set forth in Table 2.

**Table 2: Dry Foam Portion Process Example 1.**

| Example# | Sections | Sections | Sections | Sections | Section/Die | | |
|---|---|---|---|---|---|---|---|
| | 1 - 2 | 3 - 4 | 5 - 7 | 8 - 9 | 10/Die | Results Description: | |
| 1 | 50 - 100C | 160 - 130 C | 100-90 C | 85-95 C | 85 - 95 C | Good expanded portions; Controlled and stable flow; Die fly knife cutter was used (400 rpm); Extruder screw (speed 80 rpm); Powder Feeder (speed 100 rpm}; Supercritical Carbon Dioxide (1.5ml/min; 80g/min) | |

The confection mass containing the bulking sweetener agent and additional ingredients listed in Table 1 was processed in a 10 section Coperion ZSK-25; co-rotating intermeshing twin screw extruder. The temperature conditions in the sections are listed in Table 2.

The confection mass of Table 1 was pre-mixed and added to the first section of the extruder. The confection mass was then further mixed and conveyed by the twin screws through sections 2 to 10, and then out of the extruder through a die plate with a hole in it. The confection mass was heated and then cooled as it was conveyed through the extruder according to the temperatures listed in Table 2. When the confection mass melted, fluid supercritical carbon dioxide was injected in to the extruder. The fluid supercritical carbon dioxide intermixed with and dissolved in the melted confection mass. The intermixed mass was conveyed through the cooler extruder sections and then out of the extruder through the die plate. The temperature and mixing conditions were such that sufficient pressure was created in the extruder to allow the supercritical carbon dioxide to remain fluid in the extruder. The pressure created in the extruder was also sufficient to force the confection mass through the die plate.

When the confection mass exited the extruder die plate in to ambient temperature and atmospheric pressure, the carbon dioxide in the confection mass expanded, expanding the confection mass around it. As the confection mass exited the extruder die plate, the confection mass started to cool and become firm. The net result was that the expanded confection mass maintained its expanded shape upon reaching room temperature, that is, the confection mass became a dry foam portion. A fly knife was positioned exterior to the die plate and cut the extruding confection mass into small pieces as the mass exited the die plate.

The "Results Description" in Table 2 describes the exiting dry foam portions formed and the exiting process character. The formed dry foam portions of example 1 had an envelope density of approximately 0.22 g/ml.

A chewing gum portion (example 2) was produced by mixing and heating the chewing gum ingredients listed in Table 3 until well mixed and fluid.

**Table 3: Chewing Gum Portion Formula Example 2**

| Sample # | Chewing Gum Base | | HIS* | | Color |
|---|---|---|---|---|---|
| 2 | 99.78% | | 0.19% | | 0.03% |

| | | | | | |
|---|---|---|---|---|---|
| * HIS= high intensity sweetener | | | | | |

A multiple portion confectionary product (example 3) was then produced by combining the dry foam portions (example 1) with the chewing gum portions (example 2). The dry foam portions were combined with the chewing gum portions by dipping and dragging the dry foam portions through a pool of fluid chewing gum. The combined multiple portion confectionary product examples were then allowed to cool to room temperature.

The resulting multiple portion confectionary product examples were perceived as having a crunchy texture with an initial fast release of flavor and sweetener when chewed. The multiple portion confectionary product examples also had a residual (i.e., gum cud) similar to that of a chewing gum piece of equal volume made by a traditional chewing gum process.

The compositions and methods of the present invention are capable of being incorporated in the form of a variety of embodiments, only a few of which have been illustrated and described. The described embodiments are to be considered in all respects only as illustrative and not restrictive, and the scope of the invention, therefore, is indicated by the appended claims rather than by the foregoing description. All changes which come within the meaning and range of equivalency of the claims are to be embraced within their scope.

## Claims

1. A confectionary product comprising:
a) a dry foam portion having an envelope density of less than 0.8 g/ml and comprising not less than 80 wt. % bulking sweetener agent; and
b) a chewing gum portion.

2. The confectionary product of claim 1, wherein the dry foam portion has an envelope density of less than 0.5g/ml or less than 0.3 g/ml.

3. The confectionary product of claim 1, wherein a dry foam portion comprises less than 8 wt. % water, such as less than 5 wt. % water or less than 3 wt.% of water.

4. The confectionary product of any of claims 1 to 3, wherein the bulking sweetener agent in the dry foam portion comprises 10 - 90 wt. % isomalt.

5. The confectionary product of any of claims 1 to 4, wherein the bulking sweetener agent in the dry foam portion contains 30 - 100 wt. % polydextrose.

6. The confectionary product of any of claims 1 to 5, wherein the chewing gum portion contains not less than 50 wt.% gum base, not less than 70 wt. % gum base, not less than 80 wt. % gum base or not not less than 90 wt. % gum base.

7. The confectionary product of any of claims 1 to 6, wherein the chewing gum portion contains not more than 10 wt. % bulking sweetener agent, such as not more than 5 wt. % bulking sweetener agent.

8. The confectionary product of any of claims 1 to 7, wherein the chewing gum portion contains polyvinyl acetate.

9. The confectionary product of any of claims 1 to 8, wherein the chewing gum portion covers at least part of a dry foam portion.

10. A method of producing a dry foam portion comprising the steps of:
a) forming an ingredient mass comprising not less than 80 wt. % bulking sweetener agent;
b) mixing and melting the ingredient mass to form a melted ingredient mass;
c) mixing the melted ingredient mass with super critical carbon dioxide; and
d) expanding the resultant mixed melted ingredient mass to an envelope density of less than 0.8 g/ml.

11. The method of claim 10 wherein the step of mixing the melted ingredient mass with the gas generating ingredients is performed at an elevated pressure.

12. The method of claim 10 or claim 11 wherein the step of expanding the resultant mixed melted ingredient mass comprises the step of forcing the mixed melted ingredient mass through an opening and/or die under such temperature and pressure conditions as to create expansion of the mixed melted ingredient mass upon exiting the opening and/or die, such as by applying a vacuum of between 51 - 102 kPa (15 - 30 inches Hg) and a temperature of 80 - 120 °C to the mixed melted ingredient mass.

13. The method of any of claims 10 to 12 wherein the mixed melted ingredient mass is expanded to an envelope density of less than 0.5 g/mL or less than 0.3 g/mL.

14. The method of any of claims 10 to 13, wherein at least a portion of the method is performed using an extruder, such an extruder comprising a co-rotating intermeshing twin screw, an extruder comprising a rotor and stator configuration, or an extruder comprising a kneader pin configuration.

15. The method of any one of claims 10 to 14, further including the step of finishing the dry foam portion by spraying with liquid ingredients, dusting with dry ingredients, or a combination thereof.

16. The method of any one of claims 10 to 15, further including the step of forming the dry foam portion into different sizes, shapes, or densities using rollers, knives, molds, rotary former, stamps, drop roller, or combination thereof.

17. A method of producing a multiple portion confectionary product comprising the steps of:
a) producing a dry foam portion according to the method of any of claims 10 to 16;
b) producing a chewing gum portion; and
c) combining the dry foam portion and the chewing gum portion.

18. The method of claim 17, wherein the chewing gum portion is combined with the dry foam portion by a process of:
spraying, pouring, dripping, or combinations thereof;
tumbling, moving, dragging, or combinations thereof; or
co-extrusion.

19. The method of claim 17 or claim 18, further including the step of forming the combined multiple portion confectionary product into shapes, such as sticks, tabs, balls, or ropes.

20. The method of any one of claims 17 to 19, further including the step of finishing the combined multiple portion confectionary product by spraying confection with liquid ingredients, dusting confection with dry ingredients, or combinations thereof.

21. The method of any one of claims 17 to 20, wherein the dry foam portion comprises not less than 80 wt. % bulking sweetener agent, such as not less than 90 wt. % bulking sweetener agent.

22. The method of any one of claims 17 to 21, wherein the chewing gum portion comprises not more than 10 wt. % bulking sweetener agent, such as not more than 5 wt. % bulking sweetener agent.

## Patentansprüche

1. Süßwarenprodukt, umfassend:
a) einen Trockenschaumanteil mit einer Hüllendichte von weniger als 0,8 g/ml und der nicht weniger als 80 Gew.-% Füllsüßmittel umfasst; und
b) einen Kaugummianteil.

2. Süßwarenprodukt nach Anspruch 1, wobei der Trockenschaumanteil eine Hüllendichte von weniger als 0,5 g/ml oder weniger als 0,3 g/ml aufweist.

3. Süßwarenprodukt nach Anspruch 1, wobei ein Trockenschaumanteil weniger als 8 Gew.-% Wasser, wie beispielsweise weniger als 5 Gew.-% Wasser oder weniger als 3 Gew.-% Wasser, umfasst.

4. Süßwarenprodukt nach einem der Ansprüche 1 bis 3, wobei das Füllsüßmittel im Trockenschaumanteil 10-90 Gew.-% Isomalt umfasst.

5. Süßwarenprodukt nach einem der Ansprüche 1 bis 4, wobei das Füllsüßmittel im Trockenschaumanteil 30 - 100 Gew.-% Polydextrose enthält.

6. Süßwarenprodukt nach einem der Ansprüche 1 bis 5, wobei der Kaugummianteil nicht weniger als 50 Gew.-% Gummibasis, nicht weniger als 70 Gew.-% Gummibasis, nicht weniger als 80 Gew.-% Gummibasis oder nicht weniger als 90 Gew.-% Gummibasis enthält.

7. Süßwarenprodukt nach einem der Ansprüche 1 bis 6, wobei der Kaugummianteil nicht mehr als 10 Gew.-% Füllsüßmittel, wie beispielsweise nicht mehr als 5 Gew.-% Füllsüßmittel, enthält.

8. Süßwarenprodukt nach einem der Ansprüche 1 bis 7, wobei der Kaugummianteil Polyvinylacetat enthält.

9. Süßwarenprodukt nach einem der Ansprüche 1 bis 8, wobei der Kaugummianteil mindestens einen Teil eines Trockenschaumanteils bedeckt.

10. Verfahren zur Herstellung eines Trockenschaumanteils, umfassend die Schritte von:
a) Bilden einer Zutatenmasse, die nicht weniger als 80 Gew.-% Füllsüßmittel umfasst;
b) Mischen und Schmelzen der Zutatenmasse, um eine geschmolzene Zutatenmasse zu formen;
c) Mischen der geschmolzenen Zutatenmasse mit superkritischem Kohlendioxid; und
d) Expandieren der resultierenden geschmolzenen Zutatenmasse auf eine Hüllendichte von weniger als 0,8 g/ml.

11. Verfahren nach Anspruch 10, wobei der Schritt des Mischens der geschmolzenen Zutatenmasse mit den gaserzeugenden Zutaten bei einem erhöhten Druck durchgeführt wird.

12. Verfahren nach Anspruch 10 oder Anspruch 11, wobei der Schritt des Expandierens der resultierenden gemischten geschmolzenen Zutatenmasse den Schritt des Drückens der gemischten geschmolzenen Zutatenmasse durch eine Öffnung und/oder einen Düsenkopf unter solchen Temperatur- und Druckbedingungen umfasst, dass beim Verlassen der Öffnung und/oder des Düsenkopfes eine Expansion der gemischten geschmolzenen Zutatenmasse entsteht, beispielsweise durch Anlegen eines Vakuums zwischen 51 - 102 kPa (15 - 30 Zoll Hg) und einer Temperatur von 80 -120 °C an die gemischte geschmolzene Zutatenmasse.

13. Verfahren nach einem der Ansprüche 10 bis 12, wobei die Masse der gemischten geschmolzenen Zutatenmasse auf eine Hüllendichte von weniger als 0,5 g/ml oder weniger als 0,3 g/ml expandiert wird.

14. Verfahren nach einem der Ansprüche 10 bis 13, wobei mindestens ein Teil des Verfahrens unter Verwendung eines Extruders durchgeführt wird, wobei ein solcher Extruder eine gleichdrehende, ineinandergreifende Doppelschnecke umfasst, einen Extruder, der eine Rotor-Stator-Konfiguration umfasst, oder einen Extruder, der eine Knetstiftkonfiguration umfasst.

15. Verfahren nach einem der Ansprüche 10 bis 14, weiter beinhaltend den Schritt des Endbearbeitens des trockenen Schaumstoffanteils durch Besprühen mit flüssigen Zutaten, Bestäuben mit trockenen Zutaten oder eine Kombination derselben.

16. Verfahren nach einem der Ansprüche 10 bis 15, weiter beinhaltend den Schritt des Formens des Trockenschaumanteils in verschiedene Größen, Formen oder Dichten unter Verwendung von Walzen, Messern, Formen, Rotationsformern, Stanzen, Fallwalzen oder Kombinationen derselben.

17. Verfahren zur Herstellung eines aus mehreren Anteilen bestehenden Süßwarenprodukts, umfassend die Schritte von:
a) Herstellen eines Trockenschaumanteils nach dem Verfahren nach einem der Ansprüche 10 bis 16;
b) Herstellen eines Kaugummianteils; und
c) Kombinieren des Trockenschaumanteils und des Kaugummianteils.

18. Verfahren nach Anspruch 17, wobei der Kaugummianteil mit dem Trockenschaumanteil nach einem Prozess kombiniert wird von:
Sprühen, Gießen, Tropfen oder Kombinationen davon;
Trommelbehandeln, Bewegen, Ziehen oder Kombinationen davon; oder
Coextrusion.

19. Verfahren nach Anspruch 17 oder Anspruch 18, weiter beinhaltend den Schritt des Formens des kombinierten, aus mehreren Anteilen bestehenden Süßwarenprodukts in Formen, wie beispielsweise Streifen, Dragees, Kugeln oder Rollen.

20. Verfahren nach einem der Ansprüche 17 bis 19, weiter beinhaltend den Schritt des Endbearbeitens des kombinierten, aus mehreren Anteilen bestehenden Süßwarenprodukts durch Besprühen der Süßwaren mit flüssigen Zutaten, Bestäuben der Süßwaren mit trockenen Zutaten oder Kombinationen derselben.

21. Verfahren nach einem der Ansprüche 17 bis 20, wobei der Trockenschaumanteil nicht weniger als 80 Gew.-% Füllsüßmittel, wie beispielsweise nicht weniger als 90 Gew.-% Füllsüßmittel, umfasst.

22. Verfahren nach einem der Ansprüche 17 bis 21, wobei der Kaugummianteil nicht mehr als 10 Gew.-% Füllsüßmittel, wie beispielsweise nicht mehr als 5 Gew.-% Füllsüßmittel, umfasst.

## Revendications

1. Produit de confiserie comprenant :
a) une partie mousse sèche ayant une densité d'enveloppe inférieure à 0,8 g/ml et ne comprenant pas moins de 80 % en poids d'agent édulcorant foisonnant ; et
b) une partie gomme à mâcher.

2. Produit de confiserie selon la revendication 1, dans lequel la partie mousse sèche a une densité d'enveloppe inférieure à 0,5 g/ml ou inférieure à 0,3 g/ml.

3. Produit de confiserie selon la revendication 1, dans lequel une partie mousse sèche comprend moins de 8 % en poids d'eau, par exemple moins de 5 % en poids d'eau ou moins de 3 % en poids d'eau.

4. Produit de confiserie selon l'une quelconque des revendications 1 à 3, dans lequel l'agent édulcorant foisonnant dans la partie mousse sèche comprend de 10 à 90 % en poids d'isomalt.

5. Produit de confiserie selon l'une quelconque des revendications 1 à 4, dans lequel l'agent édulcorant foisonnant dans la partie mousse sèche contient de 30 à 100 % en poids de polydextrose.

6. Produit de confiserie selon l'une quelconque des revendications 1 à 5, dans lequel la partie gomme à mâcher ne contient pas moins de 50 % en poids de base de gomme, pas moins de 70 % en poids de base de gomme, pas moins de 80 % en poids de base de gomme ou pas moins de 90 % en poids de base de gomme.

7. Produit de confiserie selon l'une quelconque des revendications 1 à 6, dans lequel la partie gomme à mâcher ne contient pas plus de 10 % en poids d'agent édulcorant foisonnant, par exemple pas plus de 5 % en poids d'agent édulcorant foisonnant.

8. Produit de confiserie selon l'une quelconque des revendications 1 à 7, dans lequel la partie gomme à mâcher contient de l'acétate de polyvinyle.

9. Produit de confiserie selon l'une quelconque des revendications 1 à 8, dans lequel la partie gomme à mâcher couvre au moins une partie d'une partie mousse sèche.

10. Procédé de production d'une partie mousse sèche comprenant les étapes de :
a) formation d'une masse d'ingrédients ne comprenant pas moins de 80 % en poids d'agent édulcorant foisonnant ;
b) mélange et fusion de la masse d'ingrédients pour former une masse d'ingrédients fondue ;
c) mélange de la masse d'ingrédients fondue avec du dioxyde de carbone supercritique ; et
d) expansion de la masse d'ingrédients fondue mélangée obtenue à une densité d'enveloppe inférieure à 0,8 g/ml.

11. Procédé selon la revendication 10 dans lequel l'étape de mélange de la masse d'ingrédients fondue avec les ingrédients générant du gaz est réalisée à une pression élevée.

12. Procédé selon la revendication 10 ou la revendication 11 dans lequel l'étape d'expansion de la masse d'ingrédients fondue mélangée obtenue comprend l'étape consistant à forcer la masse d'ingrédients fondue mélangée à travers une ouverture et/ou une filière dans des conditions de température et de pression permettant de créer l'expansion de la masse d'ingrédients fondue mélangée après la sortie de l'ouverture et/ou de la filière, par exemple par application d'un vide compris entre 51 et 102 kPa (15 à 30 pouces Hg) et d'une température de 80 à 120 °C à la masse d'ingrédients fondue mélangée.

13. Procédé selon l'une quelconque des revendications 10 à 12 dans lequel la masse d'ingrédients fondue mélangée est expansée à une densité d'enveloppe de moins de 0,5 g/ml ou moins de 0,3 g/ml.

14. Procédé selon l'une quelconque des revendications 10 à 13, dans lequel au moins une partie du procédé est réalisée en utilisant une extrudeuse, par exemple une extrudeuse comprenant une vis double engrenante rotative, une extrudeuse comprenant une configuration de rotor et de stator, ou une extrudeuse comprenant une configuration de goupille de pétrisseur.

15. Procédé selon l'une quelconque des revendications 10 à 14, comprenant en outre l'étape de finition de la partie mousse sèche par pulvérisation d'ingrédients liquides, saupoudrage d'ingrédients secs, ou une combinaison de ceux-ci.

16. Procédé selon l'une quelconque des revendications 10 à 15, comprenant en outre l'étape de mise en forme de la partie mousse sèche en différentes tailles, formes ou densités en utilisant des rouleaux, des couteaux, des moules, un formeur rotatif, des poinçons, un rouleur plongeur, ou une combinaison de ceux-ci.

17. Procédé de production d'un produit de confiserie à parties multiples comprenant les étapes suivantes :
a) production d'une partie mousse sèche conformément au procédé selon l'une quelconque des revendications 10 à 16 ;
b) production d'une partie gomme à mâcher ; et
c) combinaison de la partie mousse sèche et de la partie gomme à mâcher.

18. Procédé selon la revendication 17, dans lequel la partie gomme à mâcher est combinée avec la partie mousse sèche par un processus de :
pulvérisation, coulée, égouttage, ou des combinaisons de ceux-ci ;
culbutage, déplacement, dragage, ou des combinaisons de ceux-ci ; ou
co-extrusion

19. Procédé selon la revendication 17 ou la revendication 18, comprenant en outre l'étape de mise en forme du produit de confiserie à parties multiples combinées, par exemple en bâtonnets, en tablettes, en billes, ou en fils.

20. Procédé selon l'une quelconque des revendications 17 à 19, comprenant en outre l'étape de finition du produit de confiserie à parties multiples combinées par pulvérisation sur la confiserie d'ingrédients liquides, saupoudrage sur la confiserie d'ingrédients secs, ou des combinaisons de ceux-ci.

21. Procédé selon l'une quelconque des revendications 17 à 20, dans lequel la partie mousse sèche ne comprend pas moins de 80 % en poids d'agent édulcorant foisonnant, par exemple pas moins de 90 % en poids d'agent édulcorant foisonnant.

22. Procédé selon l'une quelconque des revendications 17 à 21, dans lequel la partie gomme à mâcher ne comprend pas plus de 10 % en poids d'agent édulcorant foisonnant, par exemple pas plus de 5 % en poids d'agent édulcorant foisonnant.
